# EUROPEAN PATENT APPLICATION

(11) **EP 2 675 096 A1**
(43) Date of publication of application: **18.12.2013**
(21) Application number: 11858051.3
(22) Date of filing: 31.12.2011
(51) Int. Cl.: H04L 1/18

(54) **METHOD FOR TRANSMITTING ACKNOWLEDGEMENT/NEGATIVE ACKNOWLEDGEMENT AND TERMINAL FOR IMPLEMENTING THE SAME**

(30) Priority: 12.02.2011 CN 201110037096
(71) Applicant: ZTE Corporation, Shenzhen, Guangdong 518057 (CN)
(72) Inventor: LIANG, Chunli, Shenzhen Guangdong 518057 (CN); DAI, Bo, Shenzhen Guangdong 518057 (CN); YANG, Weiwei, Shenzhen Guangdong 518057 (CN); REN, Lu, Shenzhen Guangdong 518057 (CN)
(74) Representative: Price, Nigel John King
(86) International application number: PCT/CN2011/085153
(87) International publication number: WO 2012/106975

(57) **Abstract**

The disclosure discloses a method for sending an Acknowledgement/Negative Acknowledgement (ACK/NACK) and a UE for implementing the same, which are used to solve the problem of how to feed back the ACK/NACK by a UE configured with multiple serving cells and configured to feed back the ACK/NACK using the Physical Uplink Control Channel (PUCCH) format 3 when the UE receives only a Physical Downlink Shared Channel (PDSCH) from a primary serving cell. When the UE receives only the PDSCH from the primary serving cell, the UE feeds back the ACK/NACK corresponding to the PDSCH of the primary serving cell in an ACK/NACK feedback mode configured when only one serving cell is configured; or when the UE receives only the PDSCH from the primary serving cell, the UE feeds back the ACK/NACK corresponding to the PDSCH of the primary serving cell in an ACK/NACK bundling mode; or the UE feeds back the ACK/NACK corresponding to the PDSCH of the primary serving cell in an ACK/NACK multiplexing mode.

## Description

### TECHNICAL FIELD

The disclosure relates to the field of communications, and in particular to a method for sending an Acknowledgement/Negative Acknowledgement (ACK/NACK) in a time division duplex system adopting carrier aggregation techniques and a UE for implementing the method.

### BACKGROUND

In a Hybrid Automatic Repeat Request (HARQ) mode, a code word sent by a sender not only is able to detect an error, but also has a certain error correcting capability. After receiving the code word, a decoder at a receiver checks an error condition first. If the number of errors is within the error correcting capability of the code word, then error correction is performed automatically. If there are too many errors to be handled by the error correcting capability of the code word, but the errors can be detected, then the receiver sends a decision signal to the sender via a feedback channel to require the sender to re-send information. In an Orthogonal Frequency Division Multiplex (OFDM) system, an ACK/NACK is used to represent a correct/incorrect transmitting, hereby determining whether a re-transmission is needed.

In a Long Term Evolution (LTE, a corresponding standard protocol thereof is Rel-8/9) system, an ACK/NACK may be sent separately on a Physical Uplink Control Channel (PUCCH), or may be sent along with data on a Physical Uplink Shared Channel (PUSCH).

In a Frequency Division Duplex (FDD) system, since uplink sub-frames and downlink sub-frames are in one-to-one correspondence, when a Physical Downlink Shared Channel (PDSCH) contains only one code word stream, a UE needs to feed back 1-bit ACK/NACK , and when the PDSCH contains two code word streams, the UE needs to feed back 2-bit ACK/NACK . When the UE does not need to send a PUSCH on the current sub-frame, the UE sends the 1-bit or 2-bit ACK/NACK meseage on the PUCCH using a format 1a/1b. However, when the UE needs to send a PUSCH on the current subframe, after the information of 1-bit or 2-bit ACK/NACK goes through a certain mapping from an ACK/NACK state to a corresponding bit(s), channel encoding, scrambling and modulation, the UE multiplexes and then sends the information of 1-bit or 2-bit with the data on the PUSCH.

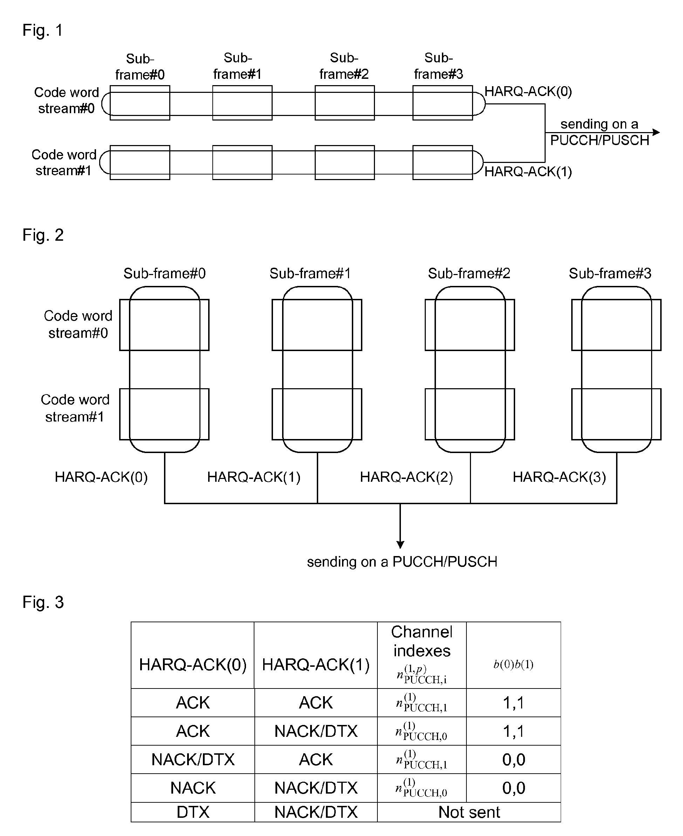

In a Time Division Duplex (TDD) system, uplink sub-frames and downlink sub-frames are not in one-to-one correspondence. In other words, it is required to send ACK/NACK (s) corresponding to multiple downlink sub-frames on the PUCCH/PUSCH in one uplink sub-frame, wherein a set of downlink sub-frames corresponding to the uplink sub-frame constitute a bundling window. In the LTE TDD, two ACK/NACK feedback modes are defined. One ACK/NACK feedback mode is ACK/NACK bundling. As shown in Fig. 1, the basic idea of the ACK/NACK bundling feedback mode is to perform a logical AND operation on ACK/NACK of code word streams corresponding to respective downlink sub-frames to be fed back in the uplink sub-frame; if PDSCH transmitting of one downlink sub-frame contains two code word streams, a UE needs to feed back 2-bit ACK/NACK corresponding to each code word stream and going through a sub-frame logical AND operation, and if PDSCH transmitting of each sub-frame contains only one code word stream, the UE needs to feed back 1-bit ACK/NACK corresponding to the code word stream and going through the sub-frame logical AND operation. When the UE does not need to send a PUSCH on the current subframe, the UE sends the 1-bit or 2-bit ACK/NACK on the PUCCH using a format 1a/1b. When the UE needs to send a PUSCH on the current subframe, the UE multiplexes and then sends the information of 1 bit or 2 bits with data on the PUSCH after the information of 1 bit or 2 bits goes through a certain channel encoding and channel scrambling. The other ACK/NACK feedback mode is ACK/NACK multiplexing. As shown in Fig. 2, in the ACK/NACK multiplexing feedback mode, one ACK/NACK needs to be fed back for each downlink sub-frame, multiple ACK/NACK need to be fed back for multiple sub-frames, and when PDSCH transmitting of a certain downlink sub-frame contains two code word streams, the logical AND operation is performed first on ACK/NACK for each code word stream, and in the end each downlink sub-frame only corresponds to one ACK/NACK. When the UE does not need to send a PUSCH on the current subframe, the UE sends the multiple ACK/NACK on the PUCCH format 1 b with channel selection, the core idea of which is to use different PUCCHs and different modulation symbols thereon to represent different ACK/NACK. This mode allows up to 4-bit ACK/NACK to be carried by way of channel selection combined with a control channel format 1b. The LTE defines a mapping relation table (called a mapping table for short, where in order to be distinguished from an LTE-A mapping table to be described, the mapping table here may also be referred to as an LTE mapping table) between an ACK/NACK state combination and a selected PUCCH channel and 2 bits information b(0)b(1) carried on the channel for different uplink and downlink sub-frame configurations, that is, uplink and downlink sub-frame configurations of 1:2/3/4 (M=2/3/4) respectively.

Whether the UE adopts the ACK/NACK bundling or the ACK/NACK multiplexing to feed back the ACK/NACK is configured by higher layer. The following discussion is directed only to ACK/NACK sending on the PUCCH.

In order to meet a requirement of an International Telecommunication Union-Advanced (ITU-Advanced), a Long Term Evolution Advanced (LTE-A, a corresponding standard protocol thereof is Rel-10) system, as an LTE evolution standard, is required to support a greater system bandwidth (up to 100 MHz), and to be backward compatible with existing LTE standards. Based on existing LTE systems, the bandwidths of the LTE systems can be combined to obtain a greater bandwidth. Such a technique is referred to as a Carrier Aggregation (CA) technique, which can improve a spectrum efficiency of an IMT-Advance system and relieve spectrum resource shortage, thus optimizing spectrum resource utilization.

In a system in which the CA is introduced, a carrier to be aggregated is referred to as a Component Carrier (CC) or a serving cell. Meanwhile, concepts of a Primary Component Carrier/Cell (PCC/PCell) and a Secondary Component Carrier/Cell (SCC/SCell) are also proposed. A system with CA includes at least one primary serving cell and a secondary serving cell, wherein the primary serving cell is always in an activated state.

When the LTE-A adopts the CA technique and a base state configures multiple downlink serving cells for a UE, the UE needs to feed back ACK/NACK of code word streams corresponding to the multiple downlink serving cells. In the LTE-A, when the ACK/NACK are sent on the PUCCH, two feedback mode are defined, namely, a feedback mode of the PUCCH format 1 b with channel selection and a feedback mode based on DFT-s-OFDM. Because a channel structure in the feedback mode based on the DFT-s-OFDM is different from each of PUCCH formats 1/1a/1b/2/2a/2b, this structure is referred to as a PUCCH format 3 in an existing LTE-A protocol. For a UE configured with multiple serving cells, if the UE can supports ACK/NACK feedback of 4 bits at most, then the UE will feed back ACK/NACK in the mode of the PUCCH format 1 b with channel selection, and if the UE can support ACK/NACK feedback of more than 4 bits, then the base station will further configure, through higher layer signalling, whether the UE feeds back the ACK/NACK in the mode of the PUCCH format 1 b with channel selection or of the PUCCH format 3.

For the mode of the PUCCH format 1 b with channel selection in the LTE-A, an existing protocol defines different mapping tables for a TDD system and an FDD system respectively, none of which mapping tables is the same as the LTE mapping table. The mapping tables are as shown in Fig.3 to Fig.9, respectively, wherein Fig.3 to Fig.5 are the LTE mapping tables (corresponding to M=2, 3, 4 respectively), Fig.6 to Fig.8 are mapping tables for an LTE-A FDD system (corresponding to A=2, 3, 4 respectively, where A is the total number of transmission blocks of serving cells configured for a UE in an LTE-A FDD carrier aggregation system), and Fig.9 is the mapping table for an LTE-A TDD system.

In the FDD system, when the UE is configured to feed back ACK/NACK in the PUCCH format 3, channel resources for sending in the PUCCH format 3 are the one/pair in four or four pairs of (when the PUCCH format 3 adopts transmit diversity) channel resources indicated dynamically by an ACK/NACK Resource Indicator (ARI) on an SCell. Therefore, when the UE receives only the PDSCH of a PCell, the channel resources for the PUCCH format 3 cannot be acquired. In this case, the protocol stipulates that the UE will feed back the ACK/NACK thereof in the PUCCH format 1a/1b. When the UE feeds back the ACK/NACK in the mode of the PUCCH format 1 b with channel selection, the mapping table of channel selection thereof, when being designed, has considered a sending form as the PUCCH format 1a/1b in case only the primary serving cell is received. Thus, for the UE feeding back the ACK/NACK in the mode of the PUCCH format 1 b with channel selection, the ACK/NACK feedback mode thereof is always the PUCCH format 1 b with channel selection, without the need of special processing for the case where only the PDSCH of the PCell is received.

In the TDD system, when only one serving cell is configured for the UE (the same as in LTE Rel-8/9), the base station needs to indicate further, through higher layer signalling, whether the UE feeds back the ACK/NACK with the ACK/NACK bundling or with the ACK/NACK multiplexing. When multiple serving cells are configured for the UE, the UE will feed back the ACK/NACK using the PUCCH format 1 b with channel selection or the PUCCH format 3. For the UE configured with multiple serving cells and configured to feed back the ACK/NACK using the PUCCH format 3, when the UE receives only the PDCSH of the PCell, how will the UE feed back the ACK/NACK is a problem pressing for a solution.

Moreover, given that multiple antennas are introduced in uplink of the LTE-A, the PUCCH adopts Spatial Orthogonal Resource Transmit Diversity (SORTD) as a transmit diversity solution thereof. Meanwhile, it is stipulated that it is configured independently whether transmit diversity is adopted for different PUCCH formats, in other words, the transmit diversity solutions of the PUCCH format 1a/1b and of the PUCCH format 3 may be different. Therefore, when the transmit diversity solution of the PUCCH format 3 and the transmission solution of the PUCCH format 1a/1b are inconsistent, and the UE receives only the PDCSH of the PCell and will feed back the ACK/NACK using the PUCCH format 1a/1b, which multiple-antenna transmit solution will be adopted by the UE to feed back the ACK/NACK is another problem pressing for a solution.

### SUMMARY

In view of this, the main purpose of the invention is to provide a method and UE for sending an ACK/NACK in a time division duplex system, to solve a technique problem of how to feed back the ACK/NACK by a UE configured with multiple serving cells and configured to feed back the ACK/NACK in the PUCCH format 3 in the time division duplex system when the UE receives only a PDSCH from a primary serving cell.

In order to achieve the above purpose, the technical solution of the disclosure is implemented as follows.

A method for sending an Acknowledgement/Negative Acknowledgement (ACK/NACK) in a time division duplex (TDD) system, applied to a User Equipment (UE) configured with multiple serving cells and configured to feed back the ACK/NACK using a Physical Uplink Control Channel (PUCCH) format 3; when the UE receives only a Physical Downlink Shared Channel (PDSCH) from a primary serving cell, the UE feeds back the ACK/NACK corresponding to the PDSCH of the primary serving cell in one of the following modes:
Mode 1: the UE feeds back the ACK/NACK corresponding to the PDSCH of the primary serving cell in an ACK/NACK feedback mode configured when only one serving cell is configured.
   In Mode 1, when the ACK/NACK feedback mode configured when only one serving cell is configured for the UE is an ACK/NACK bundling mode, the UE may feed back the ACK/NACK corresponding to the PDSCH of the primary serving cell in the ACK/NACK bundling mode when the UE receives only the PDSCH from the primary serving cell; and
   in Mode 1, when the ACK/NACK feedback mode configured when only one serving cell is configured for the UE is an ACK/NACK multiplexing mode, the UE may feed back the ACK/NACK corresponding to the PDSCH of the primary serving cell in the ACK/NACK multiplexing mode when the UE receives only the PDSCH from the primary serving cell.
Mode 2: the UE feeds back the ACK/NACK corresponding to the PDSCH of the primary serving cell in an ACK/NACK bundling mode.
Mode 3: the UE feeds back the ACK/NACK corresponding to the PDSCH of the primary serving cell in an ACK/NACK multiplexing mode.
Mode 4: when the UE receives only a Physical Downlink Shared Channel (PDSCH) from a primary serving cell, the UE feeds back the ACK/NACK using the PUCCH format 3, wherein when a PUCCH format 3 channel resource index corresponding to the PUCCH format 3 is determined, a value of an ACK/NACK Resource Indicator (ARI) is a default value agreed on by the UE and a base station or a value configured by higher layer.

Furthermore, an application scenario of the method may be an uplink and downlink configuration 5 of the TDD system.

Furthermore, based on Mode 1 and Mode 2, when feeding back, by the UE, the ACK/NACK corresponding to the PDSCH of the primary serving cell in the ACK/NACK bundling mode, the ACK/NACK may be sent using a PUCCH format 1a/1b in the ACK/NACK bundling mode.

Furthermore, based on Mode 1 and Mode 3, when feeding back, by the UE, the ACK/NACK corresponding to the PDSCH of the primary serving cell in the ACK/NACK multiplexing mode, the ACK/NACK multiplexing mode may be a mode of PUCCH format 1 b with channel selection.

In the mode of PUCCH format 1 b with channel selection, a mapping relation table between an ACK/NACK state combination {HARQ-ACK(i), i=0, 1, 2, 3} and an index of a selected channel in a PUCCH format 1 b as well as 2-bit information b(0)b(1) carried on the selected channel may be a mapping table defined by Long Term Evolution (LTE) or a mapping table defined by Long Term Evolution Advanced (LTE-A).

Furthermore, based on Mode 1 and Mode 2, when feeding back, by the UE, the ACK/NACK corresponding to the PDSCH of the primary serving cell in an ACK/NACK bundling mode, the UE may send the ACK/NACK in one of the following multi-antenna transmitting solutions:
Multi-antenna transmitting solution 1: when a Spatial Orthogonal Resource Transmit Diversity (SORTD) activation configuration parameter for the PUCCH format 3 is ***ON***, the UE sends the ACK/NACK in a PUCCH format 1a/1b using an SORTD mode; and when the SORTD activation configuration parameter for the PUCCH format 3 is ***OFF**,* the UE sends the ACK/NACK in the PUCCH format 1a/1b using a single antenna transmitting mode.
Multi-antenna transmitting solution 2: when a Spatial Orthogonal Resource Transmit Diversity (SORTD) activation configuration parameter for a PUCCH format 1 a/1b is ***ON***, the UE sends the ACK/NACK in the PUCCH format 1 a/1b using an SORTD mode; and when the SORTD activation configuration parameter for the PUCCH format 1a/1b is ***OFF***, the UE sends the ACK/NACK in the PUCCH format 1a/1b using a single antenna transmitting mode.

Furthermore, based on Mode 1 and Mode 3, when feeding back, by the UE, the ACK/NACK corresponding to the PDSCH of the primary serving cell in an ACK/NACK multiplexing mode, the UE may send the ACK/NACK using a mode of PUCCH format 1 b with channel selection as well as a single antenna transmitting mode.

Based on the above method proposed by the disclosure, the disclosure further proposes a UE for implementing the above method. Multiple serving cells are configured for the UE, and the UE is configured to feed back an Acknowledgement/Negative Acknowledgement (ACK/NACK) using a Physical Uplink Control Channel (PUCCH) format 3, wherein when the UE receives only a Physical Downlink Shared Channel (PDSCH) from a primary serving cell, the UE feeds back the ACK/NACK corresponding to the PDSCH of the primary serving cell in an ACK/NACK feedback mode configured when only one serving cell is configured; or the UE feeds back the ACK/NACK corresponding to the PDSCH of the primary serving cell in an ACK/NACK bundling mode; or the UE feeds back the ACK/NACK corresponding to the PDSCH of the primary serving cell in an ACK/NACK multiplexing mode; or when a PUCCH format 3 channel resource index corresponding to the PUCCH format 3 is determined, an ACK/NACK Resource Indicator (ARI) is given a default value agreed on by the UE and a base station.

Furthermore, when the UE feeds back the ACK/NACK corresponding to the PDSCH of the primary serving cell in an ACK/NACK feedback mode configured when only one serving cell is configured,
when the ACK/NACK feedback mode configured when only one serving cell is configured is the ACK/NACK bundling mode, the UE may feed back the ACK/NACK corresponding to the PDSCH of the primary serving cell in the ACK/NACK bundling mode when the UE receives only the PDSCH from the primary serving cell; and
when the ACK/NACK feedback mode configured when only one serving cell is configured is the ACK/NACK multiplexing mode, the UE may feed back the ACK/NACK corresponding to the PDSCH of the primary serving cell in the ACK/NACK multiplexing mode when the UE receives only the PDSCH from the primary serving cell.

Furthermore, when the UE feeds back the ACK/NACK corresponding to the PDSCH of the primary serving cell in an ACK/NACK bundling mode, the ACK/NACK may be sent using a PUCCH format 1a/1b in the ACK/NACK bundling mode; and
when the UE feeds back the ACK/NACK corresponding to the PDSCH of the primary serving cell in an ACK/NACK multiplexing mode, the ACK/NACK multiplexing mode may be a mode of PUCCH format 1 b with channel selection.

Furthermore, when the UE feeds back the ACK/NACK corresponding to the PDSCH of the primary serving cell in an ACK/NACK bundling mode,
when a Spatial Orthogonal Resource Transmit Diversity (SORTD) activation configuration parameter for the PUCCH format 3 is ***ON***, the UE may send the ACK/NACK in a PUCCH format 1a/1b using an SORTD mode; and when the SORTD activation configuration parameter for the PUCCH format 3 is ***OFF***, the UE may send the ACK/NACK in the PUCCH format 1a/1b using a single antenna transmitting mode.

When a Spatial Orthogonal Resource Transmit Diversity (SORTD) activation configuration parameter for a PUCCH format 1a/1b is ***ON***, the UE may send the ACK/NACK in the PUCCH format 1a/1b using an SORTD mode; and when the SORTD activation configuration parameter for the PUCCH format 1a/1b is ***OFF***, the UE may send the ACK/NACK in the PUCCH format 1a/1b using a single antenna transmitting mode.

Furthermore, when the UE feeds back the ACK/NACK corresponding to the PDSCH of the primary serving cell in an ACK/NACK multiplexing mode, the UE may send the ACK/NACK using a single antenna transmitting mode as well as a mode of PUCCH format 1 b with channel selection.

The method and device for sending an ACK/NACK provided by the disclosure are applied to a UE configured with multiple serving cells and configured to feed back the ACK/NACK using a PUCCH format 3 in a time division duplex system, and implement the technical problem of feeding back the ACK/NACK when only a PDSCH from a primary serving cell is received.

### BRIEF DESCRIPTION OF THE DRAWINGS

Fig. 1 is a schematic diagram in an ACK/NACK bundling mode;
Fig. 2 is a schematic diagram in an ACK/NACK multiplexing mode;
Fig. 3 is a mapping table when M=2 in an LTE TDD system;

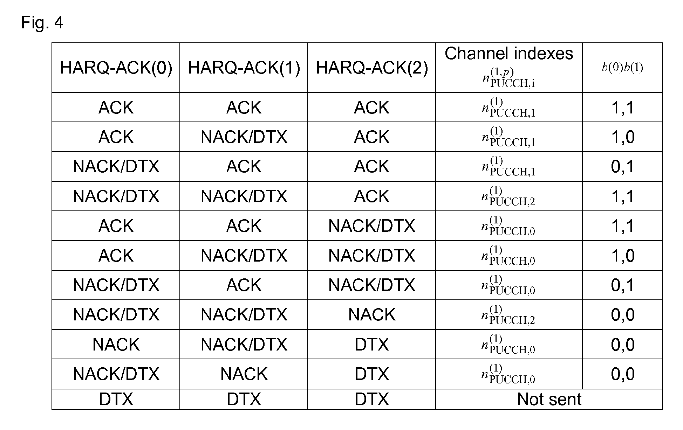

Fig. 4 is a mapping table when M=3 in an LTE TDD system;

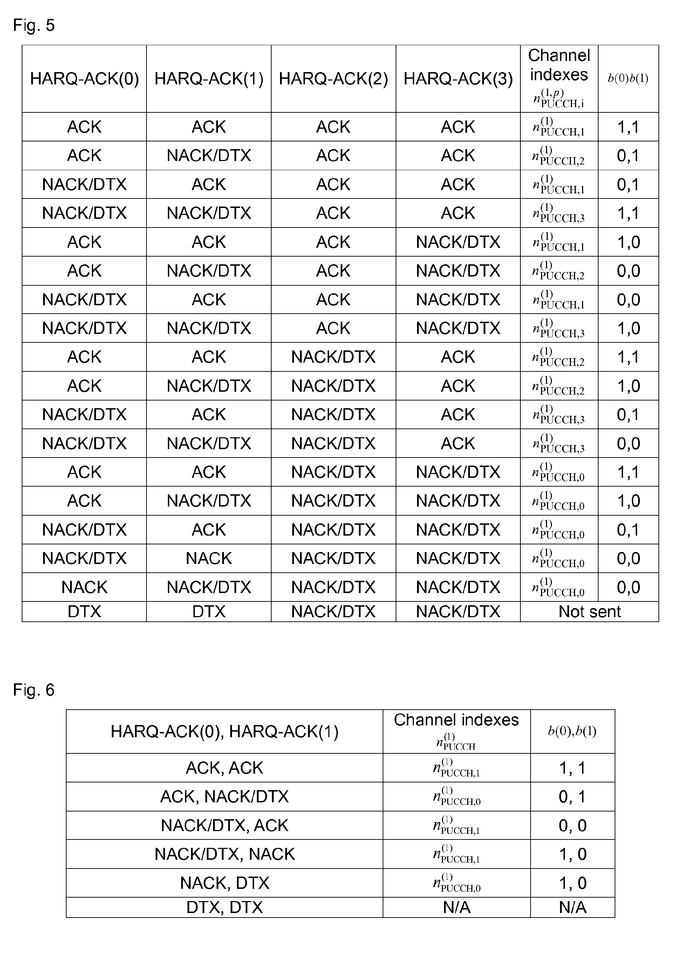

Fig. 5 is a mapping table when M=4 in an LTE TDD system;
Fig. 6 is a mapping table when A=2 in an LTE-A FDD system;

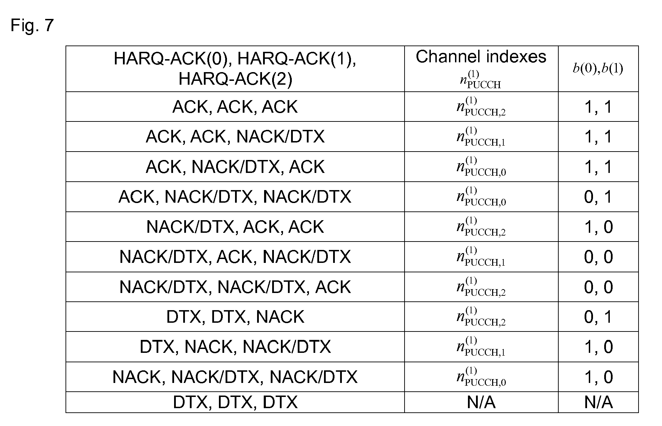

Fig. 7 is a mapping table when A=3 in an LTE-A FDD system;

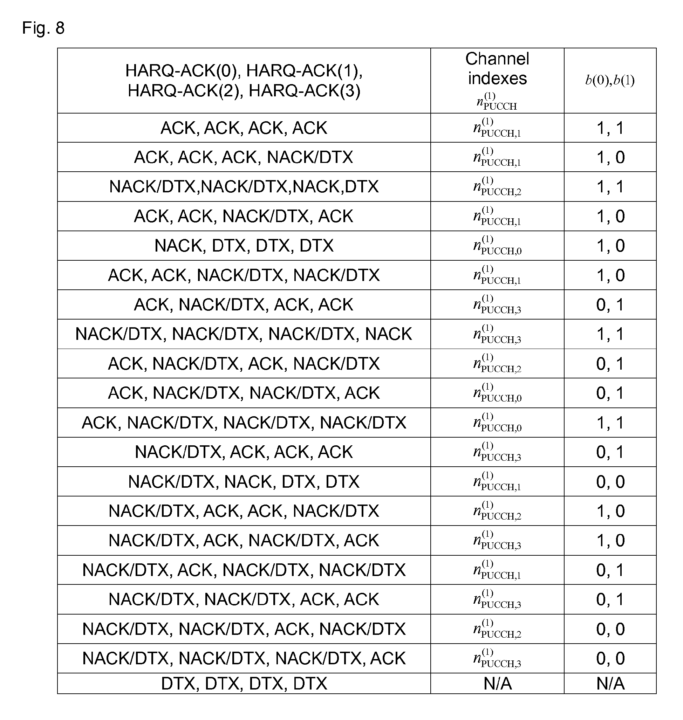

Fig. 8 is a mapping table when A=4 in an LTE-A FDD system;

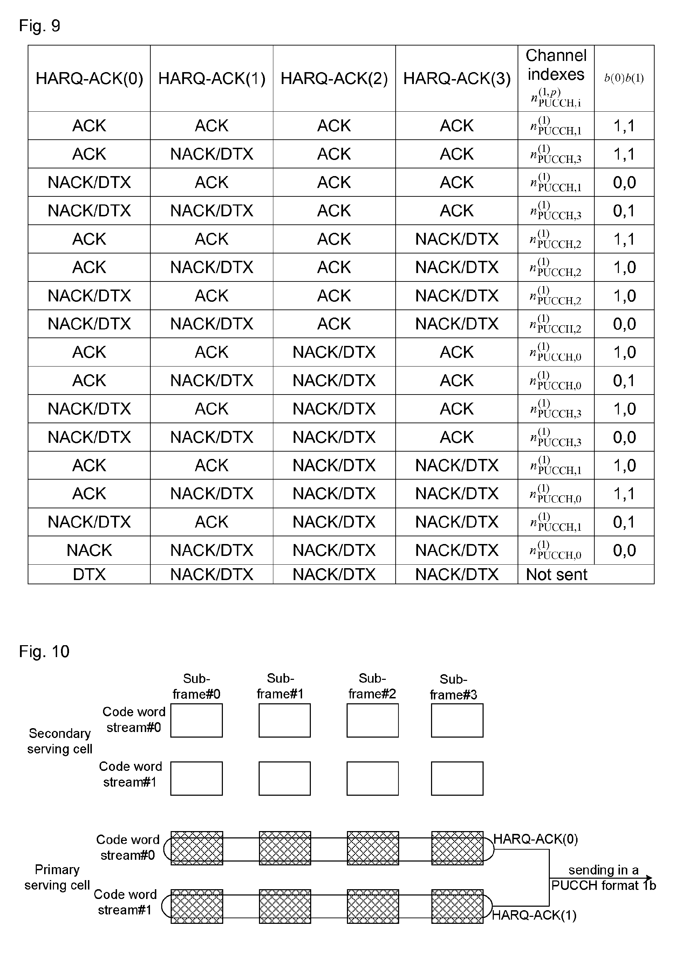

Fig. 9 is a mapping table in an LTE-A TDD system;
Fig. 10 is a schematic diagram of feeding back, by a UE, an ACK/NACK corresponding to a PDSCH of a primary serving cell by way of ACK/NACK bundling according to an embodiment of the disclosure;

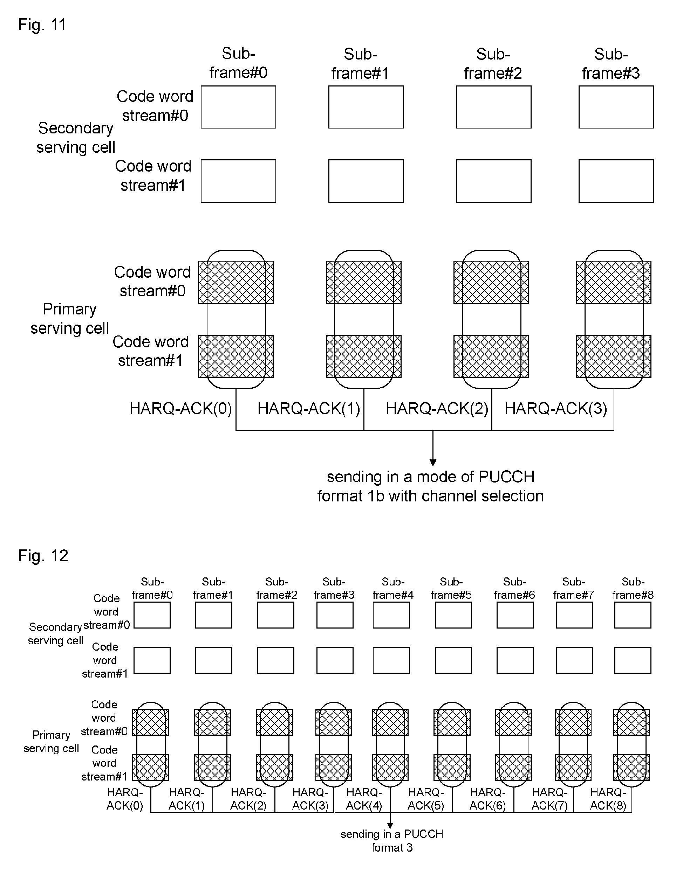

Fig. 11 is a schematic diagram of feeding back, by a UE, an ACK/NACK corresponding to a PDSCH of a primary serving cell by way of ACK/NACK multiplexing according to an embodiment of the disclosure; and
Fig. 12 is a schematic diagram of feeding back by, by a UE, an ACK/NACK corresponding to a PDSCH of a primary serving cell by way of PUCCH format 3 according to an embodiment of the disclosure.

### DETAILED DESCRIPTION

In order to clarify the purpose, technical solution and advantages of the disclosure, the disclosure is further elaborated below with reference to embodiments and the companying figures.

### Embodiment 1

As shown in Fig. 10, a base station configures for a certain UE two serving cells, i.e., a primary serving cell and a secondary serving cell, and the UE is configured to feed back an ACK/NACK using a PUCCH format 3. Meanwhile, it is assumed that an ACK/NACK feedback mode of the UE is configured as ACK/NACK bundling when only one serving cell is configured for the UE (before the carrier aggregation technique is adopted).

Assuming that the UE receives only a PDSCH of the PCell within a certain bundling window, and that the UE feeds back the ACK/NACK in Mode 1 of the disclosure, then the UE feeds back the ACK/NACK corresponding to the PDSCH of the PCell in the ACK/NACK bundling mode.

### Embodiment 2

As shown in Fig. 11, a base station configures for a certain UE two serving cells, i.e., a primary serving cell and a secondary serving cell, and the UE is configured to feed back an ACK/NACK using a PUCCH format 3. Meanwhile, it is assumed that an ACK/NACK feedback mode of the UE is configured as ACK/NACK multiplexing when only one serving cell is configured for the UE (before the carrier aggregation technique is adopted).

Assuming that the UE receives only a PDSCH of the PCell within a certain bundling window, and that the UE feeds back the ACK/NACK in Mode 1 of the disclosure, then the UE feeds back the ACK/NACK corresponding to the PDSCH of the PCell in the ACK/NACK multiplexing mode.

### Embodiment 3

As shown in Fig. 10, a base station configures for a certain UE two serving cells, i.e., a primary serving cell and a secondary serving cell, and the UE is configured to feed back an ACK/NACK using a PUCCH format 3.

Assuming that the UE receives only a PDSCH of the PCell within a certain bundling window, and that the UE feeds back the ACK/NACK in Mode 2 of the disclosure, then the UE feeds back the ACK/NACK corresponding to the PDSCH of the PCell in the ACK/NACK bundling mode.

### Embodiment 4

As shown in Fig. 11, a base station configures for a certain UE two serving cells, i.e., a primary serving cell and a secondary serving cell, and the UE is configured to feed back an ACK/NACK using a PUCCH format 3.

Assuming that the UE receives only a PDSCH of the PCell within a certain bundling window, and that the UE feeds back the ACK/NACK in Mode 3 of the disclosure, then the UE feeds back the ACK/NACK corresponding to the PDSCH of the PCell in the ACK/NACK multiplexing mode.

Given that the ACK/NACK bundling will perform an AND operation on the ACK/NACK s of corresponding code word streams of various sub-frames within the bundling window, that is, so long as the ACK/NACK of a corresponding code word stream of one sub-frame is NACK, re-transmission of the code word stream is required for all sub-frames within the bundling window, which has a significant impact on downlink throughput performance. In contrary, the ACK/NACK multiplexing performs the AND operation only on code words, and ACK/NACK s between sub-frames are independent of each other. Moreover, system simulations show that the AND operation on code words has less impact on system throughput performance than the AND operation on the sub-frames. Therefore, the preferred solution of the disclosure is the mode 3.

### Embodiment 5

As shown in Fig. 12, a base station configures for a certain UE two serving cells, i.e., a primary serving cell and a secondary serving cell, and an uplink and downlink sub-frame configuration of a TDD system is configuration 5, that is, the UE needs to feed back the ACK/NACK s of nine downlink sub-frames on one uplink sub-frame, and the UE is configured to feed back the ACK/NACK s in a PUCCH format 3.

Assuming that the UE receives only a PDSCH of the PCell within a certain bundling window, and as the uplink and downlink sub-frame configuration of the TDD system is configuration 5, the UE will feed back the ACK/NACK in Mode 4 of the disclosure. Then the UE will feed back the ACK/NACK corresponding to the PDSCH of the PCell in the PUCCH format 3, and when channel resources corresponding to the PUCCH format 3 are determined, the value of an ARI is a default value agreed on by the UE and the base station or a value configured by higher layer, such as a fixed value of "00".

Since the channel resources corresponding to the PUCCH format 3 are shared by multiple UEs, that is, channel resources corresponding to the PUCCH format 3 available for multiple UEs are the same, channel resources used for sending by a UE in the PUCCH format 3 on a certain uplink sub-frame are dynamically indicated by the ARI in a PDCCH of the SCell. In this case, the base state needs a certain scheduling strategy to ensure that there is no conflict between resources corresponding to the PUCCH format 3 used by the multiple UEs.

### Embodiment 6

A base station configures, for a certain UE having multiple uplink transmitting antennas, two serving cells, i.e., a primary serving cell and a secondary serving cell, and the UE is configured to feed back an ACK/NACK using a PUCCH format 3. Moreover, an SORTD activation configuration parameter of the PUCCH format 3 is ***ON***, and an SORTD activation configuration parameter of PUCCH format 1a/1b is ***ON***.

It is assumed that the UE receives only a PDSCH of the PCell within a certain bundling window, and meanwhile it is assumed that the UE feeds back the ACK/NACK corresponding to the PDSCH of the PCell in the ACK/NACK bundling mode after the UE adopts Mode 1 or 2 of the disclosure.

When the UE feeds back the ACK/NACK using multi-antenna transmitting solution 1 of the disclosure, the UE sends the ACK/NACK in the PUCCH format 1a/1b in an SORTD mode.

When the UE feeds back the ACK/NACK using multi-antenna transmitting solution 2 of the disclosure, the UE sends the ACK/NACK in the PUCCH format 1a/1b in the SORTD mode.

### Embodiment 7

A base station configures, for a certain UE having multiple uplink transmitting antennas, two serving cells, i.e., a primary serving cell and a secondary serving cell, and the UE is configured to feed back an ACK/NACK using a PUCCH format 3. Moreover, an SORTD activation configuration parameter of the PUCCH format 3 is ***ON***, and an SORTD activation configuration parameter of PUCCH format 1a/1b is ***OFF**.*

It is assumed that the UE receives only a PDSCH of the PCell within a certain bundling window, and meanwhile it is assumed that the UE feeds back the ACK/NACK corresponding to the PDSCH of the PCell in the ACK/NACK bundling mode after the UE adopts Mode 1 or 2 of the disclosure.

When the UE feeds back the ACK/NACK using multi-antenna transmitting solution 1 of the disclosure, the UE sends the ACK/NACK in the PUCCH format 1a/1b in an SORTD mode.

When the UE feeds back the ACK/NACK using multi-antenna transmitting solution 2 of the disclosure, the UE sends the ACK/NACK in the PUCCH format 1a/1b in a single antenna transmitting mode.

### Embodiment 8

A base station configures, for a certain UE having multiple uplink transmitting antennas, two serving cells, i.e., a primary serving cell and a secondary serving cell, and the UE is configured to feed back an ACK/NACK using a PUCCH format 3. Moreover, an SORTD activation configuration parameter of the PUCCH format 3 is **OFF**, and an SORTD activation configuration parameter of PUCCH format 1a/1b is ***ON***.

It is assumed that the UE receives only a PDSCH of the PCell within a certain bundling window, and meanwhile it is assumed that the UE feeds back the ACK/NACK corresponding to the PDSCH of the PCell in the ACK/NACK bundling mode after the UE adopts Mode 1 or 2 of the disclosure.

When the UE feeds back the ACK/NACK using multi-antenna transmitting solution 1 of the disclosure, the UE sends the ACK/NACK in the PUCCH format 1a/1b in a single antenna transmitting mode.

When the UE feeds back the ACK/NACK using multi-antenna transmitting solution 2 of the disclosure, the UE sends the ACK/NACK in the PUCCH format 1a/1b in a SORTD mode.

### Embodiment 9

A base station configures, for a certain UE having multiple uplink transmitting antennas, two serving cells, i.e., a primary serving cell and a secondary serving cell, and the UE is configured to feed back an ACK/NACK using a PUCCH format 3. Moreover, an SORTD activation configuration parameter of the PUCCH format 3 is ***OFF***, and an SORTD activation configuration parameter of PUCCH format 1a/1b is ***OFF**.*

It is assumed that the UE receives only a PDSCH of the PCell within a certain bundling window, and meanwhile it is assumed that the UE feeds back the ACK/NACK corresponding to the PDSCH of the PCell in the ACK/NACK bundling mode after the UE adopts Mode 1 or 2 of the disclosure.

When the UE feeds back the ACK/NACK using multi-antenna transmitting solution 1 of the disclosure, the UE sends the ACK/NACK in the PUCCH format 1a/1b in a single antenna transmitting mode

When the UE feeds back the ACK/NACK using multi-antenna transmitting solution 2 of the disclosure, the UE sends the ACK/NACK in the PUCCH format 1a/1b in the single antenna transmitting mode.

### Embodiment 10

A base station configures, for a certain UE having multiple uplink transmitting antennas, two serving cells, i.e., a primary serving cell and a secondary serving cell, and the UE is configured to feed back an ACK/NACK using a PUCCH format 3. Moreover, an SORTD activation configuration parameter of the PUCCH format 3 is ***ON***.

Assuming that the UE receives only a PDSCH of the PCell within a certain bundling window and that the UE feeds back the ACK/NACK corresponding to the PDSCH of the PCell in an ACK/NACK multiplexing mode after the UE adopts Mode 1 or 2 of the disclosure, then the UE sends the ACK/NACK in a mode of PUCCH format 1b with channel selection as well as in a single antenna transmitting mode.

### Embodiment 11

Based on above embodiments of the method, the disclosure further provides an embodiment of a UE implementing the method for sending an ACK/NACK in a time division duplex system provided by the disclosure. In the embodiment of the UE, multiple serving cells are configured for the UE, and the UE feeds back the ACK/NACK in a PUCCH format 3.

When the UE receives only a PDSCH from a primary serving cell, the UE feeds back the ACK/NACK corresponding to the PDSCH of the primary serving cell in an ACK/NACK feedback mode configured when only one serving cell is configured; or when the UE receives only a PDSCH from a primary serving cell, the UE feeds back the ACK/NACK corresponding to the PDSCH of the primary serving cell in an ACK/NACK bundling mode; or when the UE receives only a PDSCH from a primary serving cell, the UE feeds back the ACK/NACK corresponding to the PDSCH of the primary serving cell in an ACK/NACK multiplexing mode; or when the UE receives only a PDSCH from a primary serving cell, when a PUCCH format 3 channel resource index corresponding to the PUCCH format 3 is determined, an ARI is given a default value agreed on by the UE and a base station.

Since the UE provided by the embodiment of the disclosure is for implementing the above method provided by the disclosure, the function thereof can be derived directly or determined unambiguously from the aforementioned embodiments. In order to save space, contents same as in the summary portion of the disclosure and the aforementioned embodiments are not described here again.

The above are only preferable embodiments of the present disclosure, and are not intended to limit the scope of protection of the present disclosure. For those skilled in the art, the disclosure may have various changes and variations. Any modifications, equivalent substitutions, improvements or the like made within the concept and principle of the present disclosure shall fall within the scope of protection of the present disclosure.

### Industrial Applicability

The disclosure solves the problem of how to feed back an ACK/NACK by a UE configured with multiple serving cells and configured to feed back the ACK/NACK in the PUCCH format 3 when the UE receives only a PDSCH from a primary serving cell.

## Claims

1. A method for sending an Acknowledgement/Negative Acknowledgement (ACK/NACK) in a time division duplex (TDD) system, applied to a User Equipment (UE) configured with multiple serving cells and configured to feed back the ACK/NACK using a Physical Uplink Control Channel (PUCCH) format 3, the method comprising:
when the UE receives only a Physical Downlink Shared Channel (PDSCH) from a primary serving cell, feeding back, by the UE, the ACK/NACK corresponding to the PDSCH of the primary serving cell in an ACK/NACK feedback mode configured when only one serving cell is configured.

2. The method according to claim 1, wherein
when the ACK/NACK feedback mode configured when only one serving cell is configured for the UE is an ACK/NACK bundling mode, feeding back, by the UE, the ACK/NACK corresponding to the PDSCH of the primary serving cell in the ACK/NACK bundling mode when the UE receives only the PDSCH from the primary serving cell; and
when the ACK/NACK feedback mode configured when only one serving cell is configured for the UE is an ACK/NACK multiplexing mode, feeding back, by the UE, the ACK/NACK corresponding to the PDSCH of the primary serving cell in the ACK/NACK multiplexing mode when the UE receives only the PDSCH from the primary serving cell.

3. A method for sending an Acknowledgement/Negative Acknowledgement (ACK/NACK) in a time division duplex (TDD) system, applied to a User Equipment (UE) configured with multiple serving cells and configured to feed back the ACK/NACK using a Physical Uplink Control Channel (PUCCH) format 3, the method comprising:
when the UE receives only a Physical Downlink Shared Channel (PDSCH) from a primary serving cell, feeding back, by the UE, the ACK/NACK corresponding to the PDSCH of the primary serving cell in an ACK/NACK bundling mode; or feeding back, by the UE, the ACK/NACK corresponding to the PDSCH of the primary serving cell in an ACK/NACK multiplexing mode.

4. A method for sending an Acknowledgement/Negative Acknowledgement (ACK/NACK) in a time division duplex (TDD) system, applied to a User Equipment (UE) configured with multiple serving cells and configured to feed back the ACK/NACK using a Physical Uplink Control Channel (PUCCH) format 3, the method comprising:
when the UE receives only a Physical Downlink Shared Channel (PDSCH) from a primary serving cell, feeding back, by the UE, the ACK/NACK using the PUCCH format 3, wherein when a PUCCH format 3 channel resource index corresponding to the PUCCH format 3 is determined, a value of an ACK/NACK Resource Indicator (ARI) is a default value agreed on by the UE and a base station or a value configured by higher layer.

5. The method according to claim 4, wherein an application scenario of the method is an uplink and downlink configuration 5 of the TDD system.

6. The method according to claim 2 or 3, wherein when feeding back, by the UE, the ACK/NACK corresponding to the PDSCH of the primary serving cell in the ACK/NACK bundling mode,
the ACK/NACK is sent using a PUCCH format 1a/1b in the ACK/NACK bundling mode.

7. The method according to claim 2 or 3, wherein when feeding back, by the UE, the ACK/NACK corresponding to the PDSCH of the primary serving cell in the ACK/NACK multiplexing mode,
the ACK/NACK multiplexing mode is a mode of PUCCH format 1 b with channel selection.

8. The method according to claim 7, wherein
in the mode of PUCCH format 1 b with channel selection, a mapping relation table between an ACK/NACK state combination {HARQ-ACK(i), i=0, 1, 2, 3} and an index of a selected channel in a PUCCH format 1 b as well as 2-bit information b(0)b(1) carried on the selected channel is a mapping table defined by Long Term Evolution (LTE) or a mapping table defined by Long Term Evolution Advanced (LTE-A).

9. The method according to claim 2 or 3, wherein when feeding back, by the UE, the ACK/NACK corresponding to the PDSCH of the primary serving cell in an ACK/NACK bundling mode,
when a Spatial Orthogonal Resource Transmit Diversity (SORTD) activation configuration parameter for the PUCCH format 3 is ***ON***, the UE sends the ACK/NACK in a PUCCH format 1a/1b using an SORTD mode; and when the SORTD activation configuration parameter for the PUCCH format 3 is ***OFF***, the UE sends the ACK/NACK in the PUCCH format 1a/1b using a single antenna transmitting mode.

10. The method according to claim 2 or 3, wherein when feeding back, by the UE, the ACK/NACK corresponding to the PDSCH of the primary serving cell in an ACK/NACK bundling mode,
when a Spatial Orthogonal Resource Transmit Diversity (SORTD) activation configuration parameter for a PUCCH format 1a/1b is ***ON***, the UE sends the ACK/NACK in the PUCCH format 1a/1b using an SORTD mode; and when the SORTD activation configuration parameter for the PUCCH format 1a/1b is ***OFF***, the UE sends the ACK/NACK in the PUCCH format 1a/1b using a single antenna transmitting mode.

11. The method according to claim 2 or 3, wherein when feeding back, by the UE, the ACK/NACK corresponding to the PDSCH of the primary serving cell in an ACK/NACK multiplexing mode, the UE sends the ACK/NACK using a mode of PUCCH format 1 b with channel selection as well as a single antenna transmitting mode.

12. A User Equipment (UE), for which multiple serving cells are configured and which is configured to feed back an Acknowledgement/Negative Acknowledgement (ACK/NACK) using a Physical Uplink Control Channel (PUCCH) format 3, wherein
when the UE receives only a Physical Downlink Shared Channel (PDSCH) from a primary serving cell, the UE feeds back the ACK/NACK corresponding to the PDSCH of the primary serving cell in an ACK/NACK feedback mode configured when only one serving cell is configured; or the UE feeds back the ACK/NACK corresponding to the PDSCH of the primary serving cell in an ACK/NACK bundling mode; or the UE feeds back the ACK/NACK corresponding to the PDSCH of the primary serving cell in an ACK/NACK multiplexing mode; or when a PUCCH format 3 channel resource index corresponding to the PUCCH format 3 is determined, an ACK/NACK Resource Indicator (ARI) is given a default value agreed on by the UE and a base station or a value configured by higher layer.

13. The UE according to claim 12, wherein when the UE feeds back the ACK/NACK corresponding to the PDSCH of the primary serving cell in an ACK/NACK feedback mode configured when only one serving cell is configured,
when the ACK/NACK feedback mode configured when only one serving cell is configured is the ACK/NACK bundling mode, the UE feeds back the ACK/NACK corresponding to the PDSCH of the primary serving cell in the ACK/NACK bundling mode when the UE receives only the PDSCH from the primary serving cell; and
when the ACK/NACK feedback mode configured when only one serving cell is configured is the ACK/NACK multiplexing mode, the UE feeds back the ACK/NACK corresponding to the PDSCH of the primary serving cell in the ACK/NACK multiplexing mode when the UE receives only the PDSCH from the primary serving cell.

14. The UE according to claim 12, wherein
when the UE feeds back the ACK/NACK corresponding to the PDSCH of the primary serving cell in an ACK/NACK bundling mode, the ACK/NACK is sent using a PUCCH format 1a/1b in the ACK/NACK bundling mode; and
when the UE feeds back the ACK/NACK corresponding to the PDSCH of the primary serving cell in an ACK/NACK multiplexing mode, the ACK/NACK multiplexing mode is a mode of PUCCH format 1 b with channel selection.

15. The UE according to claim 12, wherein when the UE feeds back the ACK/NACK corresponding to the PDSCH of the primary serving cell in an ACK/NACK bundling mode,
when a Spatial Orthogonal Resource Transmit Diversity (SORTD) activation configuration parameter for the PUCCH format 3 is ***ON***, the UE sends the ACK/NACK in a PUCCH format 1a/1b using an SORTD mode; and when the SORTD activation configuration parameter for the PUCCH format 3 is ***OFF***, the UE sends the ACK/NACK in the PUCCH format 1a/1b using a single antenna transmitting mode.

16. The UE according to claim 12, wherein when the UE feeds back the ACK/NACK corresponding to the PDSCH of the primary serving cell in an ACK/NACK bundling mode,
the ACK/NACK is sent using a PUCCH format 1a/1b in the ACK/NACK bundling mode; and
when a Spatial Orthogonal Resource Transmit Diversity (SORTD) activation configuration parameter for a PUCCH format 1a/1b is ***ON***, the UE sends the ACK/NACK in the PUCCH format 1a/1b using an SORTD mode; and when the SORTD activation configuration parameter for the PUCCH format 1a/1b is ***OFF***, the UE sends the ACK/NACK in the PUCCH format 1a/1b using a single antenna transmitting mode.

17. The UE according to claim 12, wherein when the UE feeds back the ACK/NACK corresponding to the PDSCH of the primary serving cell in an ACK/NACK multiplexing mode, the UE sends the ACK/NACK using a single antenna transmitting mode as well as a mode of PUCCH format 1 b with channel selection.
